(19) **Europäisches Patentamt / European Patent Office / Office européen des brevets**

(11) **EP 4 333 107 B1**

(12) **EUROPEAN PATENT SPECIFICATION**

(45) Date of publication and mention
of the grant of the patent:
**06.05.2026   Bulletin 2026/19**

(21) Application number: **23180194.5**

(22) Date of filing: **20.06.2023**

(51) International Patent Classification (IPC):
*H01M 4/133* (2010.01)     *H01M 4/1393* (2010.01)
*H01M 4/36* (2006.01)      *H01M 4/583* (2010.01)
*H01M 4/90* (2006.01)      *H01M 10/054* (2010.01)
*H01M 4/38* (2006.01)      *H01M 10/052* (2010.01)
*H01M 4/02* (2006.01)

(52) Cooperative Patent Classification (CPC):
H01M 4/133; H01M 4/1393; H01M 4/362;
H01M 4/364; H01M 4/38; H01M 4/583;
H01M 4/9075; H01M 10/052; H01M 2004/021;
H01M 2004/028; Y02E 60/10

(54) **POSITIVE ELECTRODE MATERIAL FOR LITHIUM-SULFUR BATTERY AND LITHIUM-SULFUR BATTERY COMPRISING THE SAME**

POSITIVELEKTRODENMATERIAL FÜR LITHIUM-SCHWEFEL-BATTERIE UND LITHIUM-SCHWEFEL-BATTERIE DAMIT

MATÉRIAU D'ÉLECTRODE POSITIVE POUR BATTERIE AU LITHIUM-SOUFRE ET BATTERIE AU LITHIUM-SOUFRE LE COMPRENANT

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority:   **31.08.2022   KR 20220110413**
**31.08.2022   KR 20220110385**
**28.12.2022   KR 20220187899**
**24.02.2023   KR 20230025408**
**30.03.2023   KR 20230042283**

(43) Date of publication of application:
**06.03.2024   Bulletin 2024/10**

(73) Proprietor: **LG Energy Solution, Ltd.**
**Seoul 07335 (KR)**

(72) Inventors:
• **JEONG, Yo-Chan**
**Daejeon 34122 (KR)**
• **LEE, Chang-Hoon**
**Daejeon 34122 (KR)**
• **YANG, Seung-Bo**
**Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**EP-A1- 3 940 822     CN-A- 111 477 874**

• ZHANG ZE ET AL: "A High-Efficiency Sulfur/Carbon Composite Based on 3D Graphene Nanosheet@Carbon Nanotube Matrix as Cathode for Lithium-Sulfur Battery", vol. 7, no. 11, 27 January 2017 (2017-01-27), DE, XP093112498, ISSN: 1614-6832, Retrieved from the Internet <URL:https://api.wiley.com/onlinelibrary/tdm/v1/articles/10.1002%2Faenm.201602543> DOI: 10.1002/aenm.201602543
• YAN WANG ET AL: "Raman spectroscopy of carbon materials: structural basis of observed spectra", CHEMISTRY OF MATERIALS, 1 September 1990 (1990-09-01), pages 557 - 563, XP055179622, Retrieved from the Internet <URL:http://www.chem.ualberta.ca/~mccreery/RLM publication PDFs/mccreery82.pdf> [retrieved on 20250203], DOI: 10.1021/cm00011a018

**Description**

TECHNICAL FIELD

The present application claims priority to Korean Patent Application No. 10-2022-0110413 filed on August 31, 2022 No. 10-2023-0025408 filed on February 24, 2023, No. 10-2022-0110385 filed on August 31, 2022, No. 10-2022-0187899 filed on December 28, 2022 and No.10-2023-0042283 filed on March 30, 2023 in the Republic of Korea.

The present disclosure relates to a positive electrode active material for a lithium-sulfur battery and a lithium-sulfur battery comprising the same.

BACKGROUND ART

A lithium-sulfur battery is a battery system using a sulfur-based material having a sulfur-sulfur (S-S) bond for a positive electrode active material and a lithium metal for a negative electrode active material. Sulfur, a main component of the positive electrode active material, is abundant in nature and can be found around the world, is non-toxic, and has low atomic weight.

As secondary batteries are used in a wide range of applications including electric vehicles (EVs) and energy storage systems (ESSs), attention is drawn to lithium-sulfur batteries theoretically having higher energy storage density by weight (~2,600 Wh/kg) than lithium-ion secondary batteries having lower energy storage density by weight (~250 Wh/kg).

During discharging, lithium-sulfur batteries undergo oxidation at the negative electrode active material, lithium, by releasing electrons into lithium cation, and reduction at the positive electrode active material, the sulfur-based material, by accepting electrons. Through the reduction reaction, the sulfur-based material is converted to sulfur anion by the S-S bond accepting two electrons. The lithium cation produced by the oxidation reaction of lithium migrates to the positive electrode via an electrolyte, and bonds with the sulfur anion produced by the reduction reaction of the sulfur-based compound to form a salt. Specifically, sulfur before the discharge has a cyclic $S_8$ structure, and it is converted to lithium polysulfide ($Li_2Sx$) by the reduction reaction and is completely reduced to lithium sulfide ($Li_2S$).

Since sulfur used in the positive electrode active material is nonconductive, electrons generated by electrochemical reaction cannot move, and elusion of poly sulfide (LiSx) occurs during charging·discharging and low electrical conductivity of sulfur and lithium sulfide slows down the dynamics of electrochemical reaction, which degrades the battery life characteristics and rate characteristics.

**In** these circumstances, recently, studies have been made to use platinum (Pt) that has been primarily used as an electrochemical catalyst to improve the dynamics of oxidation and reduction reactions of sulfur during charging·discharging of lithium-sulfur secondary batteries so as to improve the performance of the lithium-sulfur secondary batteries. However, since noble metal catalysts such as platinum are expensive, the high cost is the obstacle to the commercialization, and there are poisoning risks by oxidation and reduction reactions of sulfur during charging and discharging, so it is not easy to use as a positive electrode material of lithium-sulfur secondary batteries.

Accordingly, there is a need for technology development of positive electrode materials that improve the dynamics of electrochemical reaction during charging and discharging of lithium-sulfur secondary batteries and can be commercialized with cost efficiency.

Zhang et al., Adv. Energy Mater., 2017, 7, 1602543, discloses a sulfur/carbon composite based on 3D graphene nanosheet@carbon nanotube matrix as cathode for a lithium-sulfur battery.

DISCLOSURE

Technical Problem

The present disclosure is directed to providing a new type of positive electrode active material for use in positive electrodes of lithium-sulfur batteries. Especially, it is an object of the present invention to positive electrode active material for use in a positive electrode of a lithium-sulfur battery overcoming drawbacks of the prior art, especially for improving the performance of the lithium-sulfur battery.

Technical Solution

To solve the above-described problem, according to an aspect of the present disclosure, there is provided a positive electrode active material of the following embodiments, wherein one or more of the embodiments may be combined with each other to realize the invention. The technical solution is subject of the independent claims. Further embodiments result from the subclaims and the following written description.

Advantageous Effects

The positive electrode active material according to an embodiment of the present disclosure is a new type for used in secondary batteries, especially lithium-sulfur batteries.

Specifically, the positive electrode active material according to one or more embodiment(s) of the present invention is a new type of positive electrode active material suitable to significantly improve the loading amount and catalytic activity of sulfur. It is, therefore, possible to improve the performance of a secondary battery, especially a lithium-sulfur battery, using the same, but the effect of the present disclosure is not limited thereto.

DESCRIPTION OF DRAWINGS

The accompanying drawings illustrate an exemplary embodiment of the present disclosure, and together with the foregoing description, serve to provide further understanding of the technical aspect of the present disclosure, and thus the present disclosure should not be construed as being limited to the accompanying drawings.

FIG. 1 shows a scanning electron microscopy (SEM) image of a positive electrode active material according to an embodiment of the present disclosure. The SEM image of FIG. 1 is an image obtained by taking an area of 10 $\mu$m X 10 $\mu$m at 2,000x magnification.

FIG. 2 shows an SEM image of a positive electrode active material in which vanadium nitride particles as catalyst particles are infiltrated into the particles A according to an embodiment of the present invention. The SEM image of FIG. 2 is an image obtained by taking an area of 10 $\mu$m X 10 $\mu$m at 15,000x magnification.

FIG. 3 shows an SEM image of bundled CNT used in an embodiment of the present In FIG. 1, section 'A' represents a particle A, and section 'B' represents a particle B. disclosure as a porous carbon material. The image of FIG. 3 is an image obtained by taking an area of 10 $\mu$m X 10 $\mu$m at 500x magnification.

FIG. 4 shows an SEM image of entangled CNT used in an embodiment of the present disclosure as a porous carbon material. The image of FIG. 4 is an image obtained by taking an area of 10 $\mu$m X 10 $\mu$m at 500x magnification.

FIG. 5 shows an SEM image of reduced graphene oxide (rGO) used in an embodiment of the present disclosure as a porous carbon material. The image of FIG. 5 is an image obtained by taking an area of 10 $\mu$m X 10 $\mu$m at 1,000x magnification.

FIG. 6 shows an SEM image of a positive electrode active material in which iron particles as catalyst particles are infiltrated into the particles A according to an embodiment of the present invention. The SEM image of FIG. 6 is an image obtained by taking an area of 10 $\mu$m X 10 $\mu$m at 2,000x magnification.

FIG. 7 shows a capacity-voltage curve graph showing performance evaluation results of a battery using the positive electrode active material of example 1 and the positive electrode active material of comparative example 1, respectively.

FIG. 8 shows a capacity-voltage curve graph showing performance evaluation results of a battery using a positive electrode active material of comparative example 1 and a positive electrode active material comparative example 2,.

FIG. 9 shows a discharge capacity-cycle-coulombic efficiency curve graph showing performance evaluation results of a battery using a positive electrode active material of example 1 and a positive electrode active material of comparative example 1, respectively.

FIG. 10 shows a discharge capacity-cycle-coulombic efficiency curve graph showing performance evaluation results of a battery using a positive electrode active material of comparative example 1 and a positive electrode active material of comparative example 2, respectively.

BEST MODE

Hereinafter, the present disclosure will be described in detail.
The term "comprise" when used in this specification, specifies the presence of stated elements, but does not preclude the presence or addition of one or more other elements, unless the context clearly indicates otherwise. Terms like "including", "comprising", "containing" etc. however, include the possibility to have the meaning "consisting of" if not excluded explicitly.
"A and/or B" when used in this specification, specifies either A or B or both.
The terms as used in the specification are for the purpose of convenience, but not intended to being limiting. For example, the terms indicating positions such as 'up', 'down', 'left', 'right', 'front', 'rear', 'inner' and 'outer' are not absolute, and may refer to positions or directions in the drawings used or referenced to describe the relative position or direction between the elements. These terms include themselves as well as words including them and their derivatives and synonyms.
The term "composite" as used herein refers to a combination of two or more materials that have physically and/or chemically different phases and exert more effective functions.
The term "polysulfide" as used herein is the concept including "polysulfide ion ($S_x^{2-}$, x = 8, 6, 4, 2))" and "lithium polysulfide ($Li_2S_x$ or $LiS_x$, x = 8, 6, 4, 2)".
Regarding the properties described herein, in case that measurement conditions and methods are not described in detail, the properties are measured by the measurement conditions and methods commonly used by those having ordinary skill in the corresponding technical field.
According to an aspect of the present disclosure, there is provided a positive electrode active material for use in secondary batteries, specifically in lithium-sulfur batteries.
The positive electrode active material comprises a porous carbon material, catalyst particles and sulfur (S). Especially, the positive electrode active material may comprise two porous carbon materials, catalyst particles and sulfur (S).

The positive electrode active material comprises a) particles A comprising a first porous carbon material, at least part of which (that is one or more part(s) of which) is crystalline, and catalyst particles deposited on the first porous carbon material; and b) particles B comprising a second porous carbon material, at least part of which (that is one or more part(s) of which) is crystalline, and sulfur infiltrated into the second porous carbon material, wherein the particles A and the particles B have different morphologies.

It may be provided that the sulfur is not infiltrated into the first porous carbon material. It may be provided that the first porous carbon material and/or the particles A are substantially free of (or free of) sulfur. The term "free of" in this regard does not exclude impurities. Impurities have no technical effect with respect to the object achieved by the present invention. Impurities are not deliberately added to the layer during processing.

It may be provided that the catalyst particles are not deposited on the second porous carbon material. It may be provided that the second porous carbon material and/or the particles B are substantially free of (or free of) the catalyst particles. The term "free of" in this regard does not exclude impurities. Impurities have no technical effect with respect to the object achieved by the present invention. Impurities are not deliberately added to the layer during processing.

In an embodiment of the present disclosure, the porous carbon material is a material comprising micropores, and comprises the catalyst particles and/or the sulfur on at least one of the outer surface of the porous carbon material and/or the surface inside the pores. The first porous carbon material and the second porous carbon material may be the same or different from each other. In an embodiment of the present disclosure, the first porous carbon material is a material comprising micropores, and comprises the catalyst particles on at least one of the outer surface of the porous carbon material and/or a surface inside the micropores. In an embodiment of the present disclosure, the second porous carbon material is a material comprising micropores, and comprises the the sulfur on at least one of the outer surface of the porous carbon material and/or the surface inside the pores.

In an embodiment of the present disclosure, the catalyst particles may be chemically and/or physically bonded to at least one of the outer surface of the first porous carbon material and/or the surface inside pores, such as micropores, of the first porous carbon material.

In an embodiment of the present disclosure, the catalyst particles may be physically adsorbed onto the outer surface of the first porous carbon material and/or a surface inside the pores of the first porous carbon material. Alternatively, the catalyst particles may be chemically bonded to the outer surface of the first porous carbon material and/or the surface inside the pores of the first porous carbon material by one or more C-C covalent bond(s) and/or pi-pi interaction between an element present in the catalyst particles and carbon of the first porous carbon material. Additionally, the physical adsorption and the chemical bond may co-exist between the catalyst particles and the first porous carbon material.

In an embodiment of the present disclosure, the catalyst particles may be physically adsorbed on the outer surface of the first porous carbon material.

In an embodiment of the present disclosure, the sulfur (S, such as $S_8$) may be chemically and/or physically bonded to at least one of the outer surface of the second porous carbon material and/or the surface inside the pores.

An weight ratio of second porous carbon material and sulfur may be from 10:90 to 90:10; 10:90 to 50:50, such as about 25:75.

In an embodiment of the present disclosure, the sulfur included in the particles B is derived from a sulfur-based compound, such as e.g. $S_8$, that is mixed with the porous carbon material when manufacturing the positive electrode active material. The sulfur may be included in at least one of the outer surface of the second porous carbon material and/or the surface inside the pores. The sulfur containing compound, that is, the sulfur-based compound, may include or consist of, for example, at least one of inorganic sulfur ($S_8$), lithium sulfide ($Li_2S$), lithium polysulfide ($Li_2Sx$, $2 \leq x \leq 8$) or disulfide compounds, but is not limited thereto.

In this disclosure, the 'morphology' of the particle represents a form, a shape and a physiochemical or biochemical structure of the particle. For example, the particles A and the particles B may have a different morphologies by having a different shape. For example, the particles A may have a shape with an uneven or rough surface, such as a broccoli-like shape, a cauliflower-like shape, a spiky-shape etc. For example, the particles B may have shape with a relatively smooth surface, or a smooth surface, such as a potato-like shape (Potato-like shaped typically refers to an object that is roughly oval or oblong in shape, with a somewhat smooth surface not excluding minor unevenesses, similar to the shape of a potato), a spherical shape, an elliptoidic shape etc. The morphology of the particle, such as the shape thereof, may be determined, for example, through a scanning electron microscope (SEM) image.

Accordingly, the particles A and the particles B having different morphologies represent that the particles A and the particles B are different in at least one of the form, the shape, the physiochemical structure or the biochemical structure of the particle.

In an embodiment of the present disclosure, the particles A and the particles B having different morphologies may be determined through the measurement of at least one selected from the group consisting of the specific surface area, the porosity, the particle size and the particle shape, especially seen through an optical microscope, for each of the particles A and the particles B.

In an embodiment of the present disclosure, since the particles A comprise the catalyst particles, the particles A may promote the dynamics of electrochemical reaction of the positive electrode active material, but the function is not limited thereto. Additionally, since the particles B comprise the sulfur (S), the particles B may provide sites at which the electrochemical reaction of the positive electrode active material takes place, but the function is not limited thereto. Accordingly, it is possible that the positive electrode active material has the improved performance when the particles A, especially the catalyst particles present in or on the particles A have the similar morphology to the particles B, especially the sulfur present in (infiltrated in) the particles B.

In this context, according to an embodiment of the present disclosure, the sphericity of the particles B may be preferably larger than the sphericity of the particles A. When the sphericity of the particles B is larger than sphericity of the particles A, the positive electrode active material may be provided such that the particles B are surrounded by the particles A. Through this, it is possible to provide the positive electrode active material with the outstanding performance in which the sulfur (S)-loaded particles B are electrically connected in non-contact (that is directly contacted surface to surface) with each other by the physiochemical contact between the porous carbon material of the particles B and the porous carbon material of the particles A. Here, two or more particles B may be present in contact or non-contact with each other in the positive electrode active material, and it is obvious to those skilled in the art that this mechanism is not intended to limit the non-contact between the particles B.

In an embodiment of the present disclosure, the 'sphericity' may be defined according to the following equation 1.

$$[Equation\ 1]$$

$$\Psi = \frac{\pi^{\frac{1}{3}}\left(6V_p\right)^{\frac{2}{3}}}{A_p}$$

where $\Psi$ denotes the sphericity,
$V_p$ denotes the volume of the particle, and
$A_p$ denotes the surface area of the particle.

In an embodiment of the present disclosure, 'Vp' of the Equation 1 may represent the apparent volume of the particle. The apparent volume of the particle can be measured according to a conventional method for measuring the apparent volume. In one embodiment of the present invention, the apparent volume can be measured through the (mass/apparent density) value of the particle, and the apparent density can be measured by the value of [dry weight/(dry weight-weight in water)] of the particle, but not limited thereto. In addition, it can be measured according to a method for measuring the particle volume of the porous material.

In an embodiment of the present disclosure, 'Ap' of the Equation 1 may represent the apparent area of the particle. The apparent area of the particle may be calculated as, for example, $\pi^{1/3}(6Vp)^{2/3}$, but may also be measured according to a method for measuring the apparent area of the porous material.

A sphericity of the particles B may be larger than a sphericity of the particles A, wherein the sphericity is respectively defined according to the following equation 1:

$$[Equation\ 1]$$

$$\Psi = \frac{\pi^{\frac{1}{3}}\left(6V_p\right)^{\frac{2}{3}}}{A_p}$$

where $\Psi$ denotes the sphericity,
$V_p$ denotes the volume of the respective particle, and
$A_p$ denotes the surface area of the respective particle.

In this regard, it may be provided that the average sphericity of the particles B may be larger than a sphericity of the particles A

wherein sphericity of one particle is determined according to the following equation 1:

$$[Equation\ 1]$$

$$\Psi = \frac{\pi^{\frac{1}{3}}\left(6V_p\right)^{\frac{2}{3}}}{A_p}$$

where $\Psi$ denotes the sphericity,
$V_p$ denotes the volume of the particle, and
$A_p$ denotes the surface area of the particle.

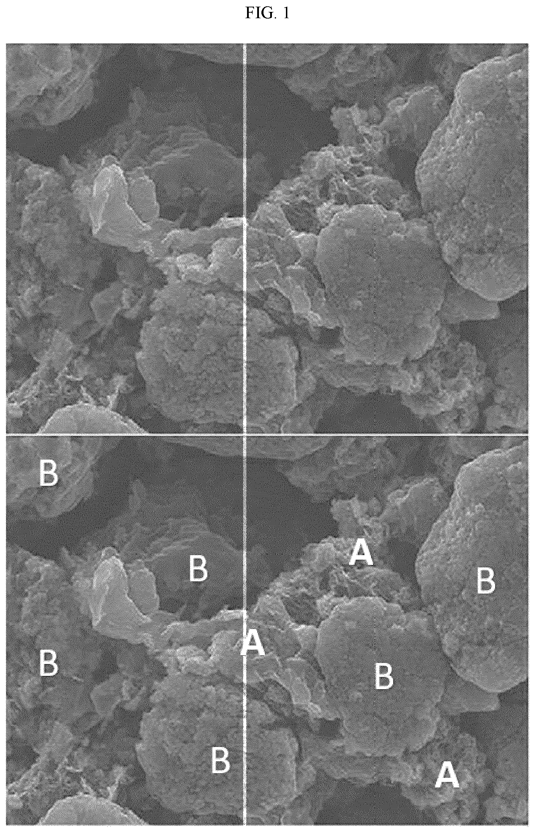

The average sphericity may be the $D_{50}$ sphericity, wherein $D_{50}$ sphericity is the median value of the sphericity distribution, that is, the value of the particle diameter at 50% in the cumulative distribution, that, if D50=x, then 50% of the particles in the sample have a sphericity larger than x, and 50% have a sphericity smaller than x.In an embodiment of the present disclosure, in the positive electrode active material, the particles A may be spread on the surface of the particles B. Specifically, in the positive electrode active material, at least part of the surface of the particles B having larger sphericity is covered with the particles A having smaller sphericity. For example, the particles B may have an approximately ellipsoidic shape, an approximately spherical shape, a potato-like shape etc. and the particles A have a non-spherical shape, such as an irregular shape, such as a spiky shape, and the particles A are arranged between the particles B and at least partially in contact with one or more of the particles B, wherein the particles A have the shape and/or are arranged to cover preferably at least 50 % of the surface of the particles B with respect to the total surface of the particles B. A respective arrangement can be seen in Fig. 1.

The size of the particles A may be from 10 to 100 $\mu$m, from 15 to 50 $\mu$m, or from 20 to 40 $\mu$m, such as about 35 $\mu$m.

The size of the particles B may be from 10 to 100 $\mu$m, or from 20 to 80 $\mu$m.

The size of the particles (the average particle diameter ($D_{50}$)) may be measured by a method commonly used in the art without particular limitation. For example, the size of the particles (for example, the average particle diameter ($D_{50}$)) may be measured by scanning electron microscopy (SEM), field-emission electron microscopy or laser diffraction. The measurement using the laser diffraction method may be performed using, for example, a commercially available laser diffraction particle size analyzer (e.g., Microtrac MT 3000). The particle diameter ($D_{50}$) refers to the diameter corresponding to 50% in the particle size distribution. Particle Size Distribution (D50) is also known as the median diameter or the medium value of the particle size distribution, it is the value of the particle diameter at 50% in the cumulative distribution, that, if D50=x nm, then 50% of the particles in the sample are larger than x nm, and 50% smaller than x nm.

FIG. 1 shows a scanning electron microscopy (SEM) image of the positive electrode active material according to an embodiment of the present disclosure. In FIG. 1, sections 'A' represents the particles A, and sections 'B' represents the particles B.

Referring to FIG. 1, it can be seen that the positive electrode active material comprises the particles B having larger sphericity and the particles A having smaller sphericity, such that the particles A are at least partially spread on the surface of the particles B, and specifically the particles A cover at least part of the surface of the particles B.

In an embodiment of the present disclosure, the particles A included in the positive electrode active material may not be spread on the surface of the particles B, but the above-described effect may work better when 50% or more of the total number of particles A included in the positive electrode active material are spread on the surface of the particles B. 50% or more of the particles A may be spread on a surface of the particles B. That is, 50% or more of the particles A may be in direct contact with the surface of at least one of the particles B. Specifically, the number of particles A spread on the surface of the particles B may be 50% to 100%, for example 55% to 90%, 60% to 85% or 70% to 80% of the total number of particles A included in the positive electrode active material, but is not limited thereto.

In this disclosure, the particles A may be spread on the surface of the particles B, for example, such that the surface of the particles B surrounded by the particles A is 20% or more of the total area of the outer surface of the particles B. Here, the area of the surface of the particles B surrounded by the particles A may be measured, for example, through SEM image analysis of the positive electrode active material. Specifically, the measurement may be made on the area of 10 $\mu$m X 10 $\mu$m at 2,000x magnification.

In the positive electrode active material, the surface of at least part of the particles B is covered by the particles A.

Specifically, since the particles B are particles of sulfur (S)-loaded porous carbon material, the particles B may have one of the features of the porous carbon material, the outer surface and the specific surface area. The particles B may have an outer surface and/or a specific surface area corresponding to that of the second porous carbon material. In this instance, the area of the outer surface of the particles B may be measured through SEM image analysis as described above, and the specific surface area of the particles B may have the similar value to the inner area, and for example, may be measured by the BET specific surface area measurement method known in the corresponding technical field, for example, the method in accordance with ISO 9277:2010.

In this instance, according to an embodiment of the present disclosure, the coverage area of the particles B by the particles A, that is, the relative area of the particles B covered by the particles A, is 20% or more with respect to the entire outer area of the particles B, such as with respect to the entire surface or outer surface of the particles B, specifically 20% to to 50%. In an embodiment of the present disclosure, when the entire outer area of the particles B is covered by the particles A, for example, the coverage area of the particles B by the particles A is 100%, an electrolyte cannot easily move in and out of the positive electrode active material during the assembly of batteries using the same, and it may slow down the dynamics of electrochemical reaction during the operation of batteries. In an aspect, when the coverage area of the particles B by the particles A is within the above range, it may be advantageous in providing the new type of positive electrode active material with significantly improved loading amount and catalytic activity of sulfur, but the present disclosure is not limited thereto.

According to an embodiment of the present disclosure, a weight ratio of the particles A and the particles B in the positive electrode active material may be, for example, 50:50 to 1:99, 40:60 to 2.5 to 95; 30:70 to 5:95, or 20:80 to 5:95, such as about 7.5:92.5 I, but is not limited thereto. When the weight ratio of the particles A and the particles B is within the above-described range, the coverage area of the particles B by the particles A within the above-described ranges is supported and it may be advantageous in improving the activation of the positive electrode active material and the performance of batteries using the same, but the present disclosure is not limited thereto.

In an embodiment of the present disclosure, the porosity of the particles A may be larger than the porosity of the particles B. The total pore volume of the particles A may be larger than the total pore volume of the particles B. Since the particles A and the particles B comprise the first and the second porous carbon material having outer pores and inner pores, respectively, they have the predefined porosity. As described above, the pores of the particles B, especially the second porous carbon material in the particles B may be surrounded by sulfur (S) and/or sulfur may be infiltrated into the pores of the particles B, while the particles A, especially the first porous carbon material in the particles A, may have open pores, and thus the porosity of the particles A may be larger than the porosity of the particles B. The porosity and/or pore volume of the particles A and/or the particles B may be measured through the method in accordance with ISO 15901:2019 known in the corresponding technical field, but the measurement method is not limited thereto.

In an embodiment of the present disclosure, the specific surface area of the particles A may be larger than the specific surface area of the particles B. As described above, at least part of the outer surface of the particles B may be covered by the particles A, and the pores of the particles B, especially the second porous carbon material in the particles B may be surrounded by sulfur (S) and/or sulfur may be infiltrated into the pores of the particles B, while the particles A, especially the first porous carbon material in the particles A, may have open pores, and thus the specific surface area of the particles A may be larger than the specific surface area of the particles B. Since the specific surface area of the particles A that surround the particles B is larger than the specific surface area of the particles B, lithium polysulfide that may migrate from the particles B may be adsorbed onto the particles A, and it may be advantageous in prompting the reactivity due to the large specific surface area of the particles A.

In this disclosure, the specific surface area may be measured, for example, by the BET method, and specifically, may be a value calculated from the amount of adsorbed nitrogen gas under liquid nitrogen temperature (77K) using BEL Japan BELSORP-mini II, but the measurement method is not limited thereto.

In an embodiment of the present disclosure, as described above, the particles A comprise the catalyst particles in or on at least one of the outer surface of the first porous carbon material and/or or the surface inside pores of the first porous carbon material. Specifically, the catalyst particles may be adsorbed onto the outer surface of the particles A.

In this instance, according to an embodiment of the present disclosure, the particles A and the particles B may be in contact with each other in at least one location at which the catalyst particles included in the particles A are present. In other words, the particles A and the particles B may be anchored to each other by the catalyst particles, that is, a connection between the particles A and the particles B is made via the catalyst particles. At least one particle A and at least one particle B may be anchored to each other by at least one catalyst particle. Alternatively, the particles A may be anchored on the surface of the particles B by the catalyst particles. At least one particle A may be anchored on the surface of at least one particle B by at least one catalyst particle.

In an embodiment of the present disclosure, in the positive electrode active material, the particles A may be merged with the particles B. For example, as described above, in the positive electrode active material, the particles A may be merged with the particles B such that the particles A cover at least part of the surface of the particles B. The particles A may be merged with the particles B such that the particles A are at least partially arranged between the particles B.

In an embodiment of the present disclosure, in the positive electrode active material, the particles A may fill the gaps between the particles B. For example, in the positive electrode active material, the particles A may fill the gaps between the particles B while covering the surface of at least two particles B spaced a predetermined distance apart, such as a distance of at least 10% of the diameter of the smaller particle B, wherein the diameter refers to the shortest distance between two opposite surfaces of the particles B, from each other.

The above-described type of positive electrode active material may increase the loading amount of sulfur and improve the catalytic activity of the loaded catalyst particles, thereby improving the performance of batteries, especially of lithium-sulfur batteries, using the same.

In an embodiment of the present disclosure, the positive electrode active material may be in a fully charged state. In this disclosure, the 'fully charged state' indicates a state of charge of at least 90%, for example, at least 99% or 100%. Specifically, a lithium-sulfur battery comprising the positive electrode active material involves oxidation/reduction reactions of sulfur according to the state of charge·discharge, and has the loss of sulfur content relative to the initial sulfur content during repeated charging·discharging. Accordingly, the positive electrode active material according to an embodiment of the present disclosure having the above-described morphology can be seen in the fully charged state of the positive electrode active material, and the fully charged state of the positive electrode active material may refer to a state in which the sulfur content is at least 90%, for example, at least 99% or 100% based on the initial amount of sulfur infiltrated into the positive electrode active material or the amount of sulfur in at least irreversible state, but the present disclosure is not limited thereto.

In an embodiment of the present disclosure, the positive electrode active material may comprise sulfur ($S_8$), for example, in an amount of 60 weight% to 90 weight% based on the total (combined) weight of the first porous carbon material and the second porous carbon material. Specifically, the amount of the sulfur ($S_8$) may be 65 weight% to 90 weight%, 70 weight% to 85 weight%, 75 weight% to 80 weight% or 65 weight% to 75 weight% based the total (combined) weight of the first porous carbon material and the second porous carbon material.

In an embodiment of the present disclosure, the first porous carbon material, at least part of which is crystalline, and the second porous carbon material, at least part of which is crystalline, may be different from each other, for example may be different materials.

In an embodiment of the present disclosure, the first porous carbon material, at least part of which is crystalline, and the second porous carbon material, at least part of which is crystalline, may be the same.

The first porous carbon material and the second porous carbon material are independently selected from at least one of carbon nanotubes (CNT), graphene, graphene oxide (GO), reduced graphene oxide (rGO), carbon black, graphite, graphite nanofiber (GNF), carbon nanofiber (CNF), activated carbon fiber (ACF), natural graphite, artificial graphite, expanded graphite, activated carbon or fullerene.

In an embodiment of the present disclosure, the first porous carbon material and the second porous carbon material may be independently selected from carbon nanotubes and reduced graphene oxide. In an embodiment of the present disclosure, the first porous carbon material may be independently selected from carbon nanotubes and reduced graphene oxide and the second porous carbon material may be carbon nanotubes.

In an embodiment of the present disclosure, the carbon nanotubes may be classified into single-walled carbon nanotubes (SWCNT) or multi-walled carbon nanotubes (MWCNT) according to the number of carbon atom layers (also known as 'carbon walls') in their structure. In an embodiment of the present disclosure, when each of the first porous carbon material and the second porous carbon material optionally comprises carbon nanotubes, the carbon nanotubes may comprise at least one of single-walled carbon nanotubes (SWCNT) or multi-walled carbon nanotubes (MWCNT).

In another embodiment of the present disclosure, the carbon nanotubes may exist such that two or more carbon nanotubes come into close contact and get entangled with each other by their cohesion strength (= entangled carbon nanotubes). In particular, in an embodiment of the present disclosure, the carbon nanotubes may be provided in the form of a carbon nanotube dispersion in which carbon nanotubes are dispersed as a single strand in a dispersion medium, but may be provided in the form of secondary structure or an agglomerate of carbon nanotubes of primary structure.

In this aspect, when each of the first porous carbon material and the second porous carbon material optionally comprises carbon nanotubes, the carbon nanotubes may comprise at least one of a bundled secondary structure or an entangled secondary structure, respectively. The first porous carbon material may be selected from bundled carbon nanotubes and reduced graphene oxide and the second porous carbon material may be entangled carbon nanotubes.

The bundled secondary structure of the carbon nanotubes is an agglomerate of primary structures oriented in the lengthwise direction of the carbon nanotubes by the cohesion strength between carbon, each primary structure being single-stranded carbon nanotubes, and may be referred to as bundled carbon nanotubes (bundled CNT).

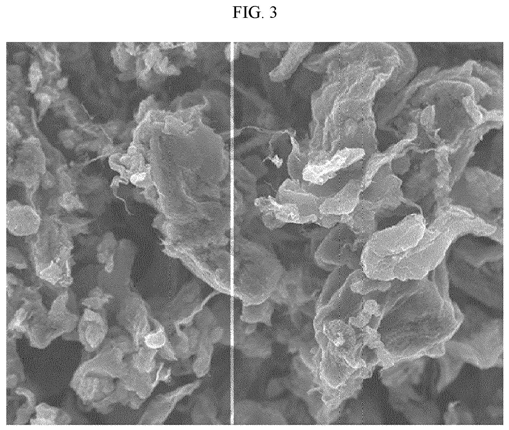

FIG. 3 shows an SEM image of an example of the bundled CNT.

The entangled secondary structure of the carbon nanotubes is a randomly entangled and agglomerated form of primary structures in a spherical shape, each primary structure being single-stranded carbon nanotubes, and may be referred to as entangled carbon nanotubes (entangled CNT). The entangled CNT may have the improved porosity by interstitial volume formed by the entanglement of the carbon nanotubes of primary structure, compared to the carbon nanotubes of primary structure.

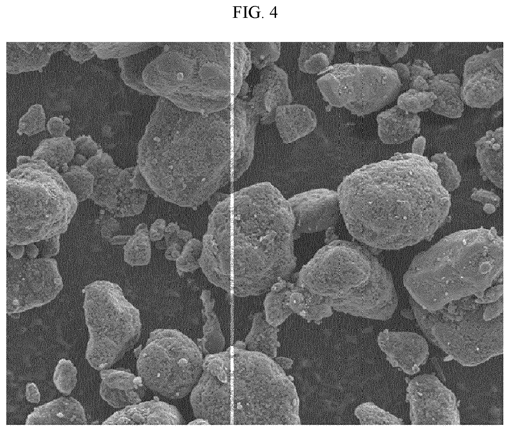

FIG. 4 shows an SEM image of an example of the entangled CNT.

When comparing the morphology of the example of bundled CNT and the morphology of the example of entangled CNT with reference to FIGS. 3 and 4, it can be seen that the bundled CNT is close to a planar shape while the entangled CNT is close to a spherical shape. Accordingly, the sphericity of the example of entangled CNT may be higher than the sphericity of the example of bundled CNT.

In an embodiment of the present disclosure, the first porous carbon material may comprise a planar carbon material to improve the specific surface area of the particles A. For example, in case that the first porous carbon material comprises carbon nanotubes, the first porous carbon material may preferably comprise bundled carbon nanotubes, but the present disclosure is not limited thereto. Additionally, in case that the first porous carbon material comprises a graphene-based material, the first porous carbon material may preferably comprise reduced graphene oxide, but the present disclosure is not limited thereto.

In an embodiment of the present disclosure, the second porous carbon material may comprise carbon nanotubes to improve the sulfur content in the positive electrode active material. For example, in case that the second porous carbon material comprises carbon nanotubes, specifically the second porous carbon material may comprise at least one of bundled CNT or entangled CNT, and more specifically may comprise entangled CNT to improve the coverage area by the particles A, but the present disclosure is not limited thereto.

In an embodiment of the present disclosure, each of the first porous carbon material and the second porous carbon material may comprise the micropores in the outer surface and inside, and the average diameter of the micropores may range, for example, from 1 nm to 200 nm, for example, from 1 nm to 100 nm, from 10 nm to 80 nm or from 20 nm to 50 nm. The average diameter may be the diameter distribution (D50), that is, the median diameter or the medium value of the diameter distribution, which is the value of the pore diameter at 50% in the cumulative distribution, that, if D50=x nm, then 50% of the pores in the sample are larger than x nm, and 50% are smaller than x nm.

The average diameter of the pores may be measured in accordance with ISO 15901:2019 known in the corresponding technical field, but is not limited thereto.

Additionally, in an embodiment of the present disclosure, the porosity (or void fraction) of each of the first porous carbon material and the second porous carbon material may range from 10% to 90% of the total volume of each porous carbon material. The porosity of the porous carbon material may be measured by the method in accordance with ISO 15901:2019 known in the corresponding technical field, but the measurement method is not limited thereto.

In an embodiment of the present disclosure, the pore volume of the porous carbon material may be, for example, $1 \text{ cm}^3/\text{g}$ to $20 \text{ cm}^3/\text{g}$ or $1 \text{ cm}^3/\text{g}$ to $10 \text{ cm}^3/\text{g}$. The pore volume may be, for example, a value calculated and measured through $N_2$ isotherm analysis obtained based on adsorption of liquid nitrogen.

In an embodiment of the present disclosure, for example, each of the first porous carbon material and the second porous carbon material may have the specific surface area of 100 to 2000 $\text{m}^2/\text{g}$, 300 to 2000 $\text{m}^2/\text{g}$, 400 to 1800 $\text{m}^2/\text{g}$, 450 to 1500 $\text{m}^2/\text{g}$ or 500 to 1200 $\text{m}^2/\text{g}$. The specific surface area may be measured by the BET method in accordance with ISO 15901:2019 known in the corresponding technical field, but is not limited thereto.

In an embodiment of the present disclosure, the catalyst particles are not limited to a particular type and may include any catalyst particles that promote the dynamics of lithium-sulfur batteries.

In an embodiment of the present disclosure, the catalyst particles may have catalytic activity on oxidation and reduction reactions of sulfur ($S_8$) included in the particles B, and at least one of lithium sulfide ($Li_2S$), lithium polysulfide ($Li_2Sx$, $2 \leq x \leq 8$) or disulfide compounds produced by the oxidation/reduction of sulfur during the operation of lithium-sulfur batteries.

The catalyst comprises or consists of vanadium nitride.

The catalyst particles comprise or consist of cobalt (Co) and/or iron (Fe). In an embodiment of the present disclosure, the catalyst particles may comprise or consist of iron (Fe).

The amount of catalyst particles in the particles A may be from 10 to 30 wt.-%, such as about 20 wt.-%, based on the total weight of the particles A. The amount of the catalyst particles is measured using a thermogravimetric analyzer (TGA).

The catalyst particles may be metal composite particles. The metal composite particles may comprise a core comprising or consisting of metal and a carbon coating layer, such as a crystalline carbon coating layer, coated on at least part of the surface of the core. A ratio of the thickness of the carbon coating layer to the average particle size $D_{50}$ of the transition metal composite particles may be 10 to 20%, such as about 15%.

The particles A may be doped with a heteroelement. Especially the first porous carbon material and/or the carbon coating layer may be doped with a heteroelement. The heteroelement which may be contained in the porous carbon substrate and/or the carbon coating layer may independently include one or more element selected from nitrogen, sulfur and oxygen, especially nitrogen. Specifically, the heteroelement doped in the porous carbon substrate may be derived from a precursor different from that from which the heteroelement contained in the carbon coating layer is derived.

**In** an embodiment of the present disclosure, the catalyst particles may, for example, have the average particle size ($D_{50}$) of 1 nm to 200 nm, but the present disclosure is not limited thereto. **In** this disclosure, the particle size may be measured by the known measurement method and the measurement method is not limited to a particular method. For example, the particle size may be measured by scanning electron microscopy (SEM), field emission scanning electron microscopy or a laser diffraction method. The measurement using the laser diffraction method may be performed, for example, using a commercially available laser diffraction particle size measurement device (for example Microtrac MT 3000). The average particle size ($D_{50}$) refers to a particle size at 50% of cumulative volume particle size distribution. Particle Size Distribution (D50) is also known as the median diameter or the medium value of the particle size distribution, it is the value of the particle diameter at 50% in the cumulative distribution, that, if D50=x nm, then 50% of the particles in the sample are larger than x nm, and 50% smaller than x nm.

In an embodiment of the present disclosure, at least part of each of the first porous carbon material and the second porous carbon material may be crystalline by the thermal treatment process when manufacturing the positive electrode active material. Specifically, each of the first porous carbon material and the second porous carbon material may be crystalline in whole.

In terms of the present disclosure, a material, such as the porous carbon material, is at least partially crystalline, that is, "a porous carbon material, at least part of which is crystalline" if it has at least one distinct peak in an XRD spectrum of the respective material. In this regard, it may be provided that the material is at least partially crystalline if the XRD spectrum of the material has a signal-to noise-ratio selected from the group consisting of greater than 1; 1.5:1; 2: 1; 5: 1; and 10: 1.

Accordingly, in an embodiment of the present disclosure, elasticity of each of the first porous carbon material and the second porous carbon material may be higher than the elasticity of amorphous carbon materials.

Additionally, in an embodiment of the present disclosure, electrical conductivity of each of the first porous carbon material and the second porous carbon material may be higher than electrical conductivity of amorphous carbon materials.

In this disclosure, the amorphous carbon materials may be, for example, the carbon material disclosed by Liu at al. Nanoscale, 2018, 10, 5246-5253.

In this disclosure, the degree of crystallinity of the porous carbon material may be measured, for example, by X-Ray Diffraction (XRD) analysis. 'XRD' is the analysis of diffraction (black condition: $2d\sin\theta=n\lambda$: a distance between 2 planes is d, an angle at which a plane is formed with X-ray is $\theta$, an arbitrary integer is n, and the wavelength of X-ray is $\lambda$) resulting by scattering and interference of X-ray by electrons around atoms when a sample is irradiated with X-ray, and is used to determine the phase, quantity, crystal size or crystallinity of the components. For example, when at least one independent peak appears in XRD spectrum, it can be seen that at least part is crystalline. In this instance, in the independent peak, a signal is measured 1 time or more, 1.5 times or more, 2 times or more, 5 times or more or 10 times or more, compared to noise.

In an embodiment of the present disclosure, an $I_D/I_G$ value of the positive electrode active material may be equal to or less than 2.0. For example, a Raman peak intensity ratio ($I_D/I_G$) <2.0.

The Raman peak intensity ratio may be measured through $I_G$ and $I_D$ values obtained in the spectrum of the positive electrode active material obtained through Raman spectroscopy. In the obtained spectrum, $I_G$ refers to peak (G-peak, 1573/cm) of crystalline region, and $I_D$ refers to peak (D-peak, 1309/cm) of amorphous region. Accordingly, in this instance, the smaller $I_G/I_D$ ratio value, the lower crystallinity.

In an embodiment of the present disclosure, the positive electrode active material may be formed by mixing the first porous carbon material, the second porous carbon material, the catalyst particles and the sulfur-based compound in a sequential order or at the same time, and performing thermal treatment. The positive electrode active material manufactured by the thermal treatment may comprise the first and second porous carbon materials, at least part of which is crystalline as described above, but the present disclosure is not limited thereto.

According to another aspect of the present disclosure, there is provided a positive electrode for a lithium-sulfur battery comprising the positive electrode active material.

In addition to the positive electrode active material, the positive electrode for a lithium-sulfur battery may further comprise a binder. The binder is not limited to a particular type and may include any binder that may be used in positive electrodes of lithium-sulfur batteries.

The binder is the component that helps to bind the positive electrode active material and the conductive material and bind to the current collector, and may include, for example, at least one of polyvinylidene fluoride (PVdF), a polyvinylidene fluoride-polyhexafluoropropylene copolymer (PVdF/HFP), polyvinyl acetate, polyvinylalcohol, polyvinylether, polyethylene, polyethyleneoxide, alkylated polyethylene oxide, polypropylene, polymethyl(meth)acrylate, polyethyl(meth)acrylate, polytetrafluoroethylene (PTFE), polyvinylchloride, polyacrylonitrile, polyvinylpyridine, polyvinylpyrrolidone, styrene-butadiene rubber, acrylonitrile-butadiene rubber, ethylene-propylene-diene monomer (EPDM) rubber, sulfonated EPDM rubber, styrene-butylene rubber, fluoro rubber, carboxyl methyl cellulose (CMC), starch, hydroxypropyl cellulose or regenerated cellulose, but is not necessarily limited thereto.

In an embodiment of the present disclosure, the binder may comprise, for example, polyvinylidene fluoride (PVDF), and specifically may comprise PVDF dispersed in N-methyl-2-pyrrolidone (NMP).

In another embodiment of the present disclosure, the binder may comprise an aqueous binder, for example, styrene butadiene rubber (SBR), and specifically may comprise an aqueous binder dispersed in an aqueous solvent such as water.

In an embodiment of the present disclosure, the positive electrode for a lithium-sulfur battery may comprise a positive electrode current collector, and a positive electrode active material layer coated on one or two surfaces of the current collector and comprising the positive electrode active material and the binder. In this instance, the positive electrode current collector is not limited to a particular type and may include those having high conductivity without causing any chemical change to the corresponding battery.

In another embodiment of the present disclosure, in addition to the positive electrode active material and the binder, the positive electrode for a lithium-sulfur battery may further comprise a conductive material and an additive. In this instance, the binder, the conductive material and the additive may include common types, and their detailed description is omitted.

A lithium-sulfur battery according to still another aspect of the present disclosure is a lithium-sulfur battery comprising the above-described positive electrode active material.

The lithium-sulfur battery comprises, for example, a positive electrode, a negative electrode, a separator between the positive electrode and the negative electrode and an electrolyte solution, and the positive electrode comprises the above-described positive electrode active material.

In an embodiment of the present disclosure, the negative electrode and the separator are not limited to a particular type and may include those used in lithium-sulfur batteries without hindering the objective of the present disclosure. The negative electrode may include, for example, a lithium metal.

In an embodiment of the present disclosure, the separator is not limited to a particular type and may include the commonly used separators of lithium-sulfur batteries.

In an embodiment of the present disclosure, the separator may comprise a porous polyolefin substrate, and if necessary, may further comprise inorganic particles on at least one surface of the porous polyolefin substrate. Additionally, the separator may further comprise a binder to bind the inorganic particles, if necessary.

In another embodiment of the present disclosure, the separator may be an electrolyte membrane of a film shape comprising a solid electrolyte, and may further comprise a binder to bind the solid electrolyte, if necessary. The solid electrolyte is not limited to a particular type and may include those commonly used in lithium-sulfur batteries, for example, at least one of a polymer-based solid electrolyte or an inorganic solid electrolyte.

In an embodiment of the present disclosure, the electrolyte solution comprises those commonly used in lithium-sulfur batteries. The electrolyte solution may comprise a lithium salt and a nonaqueous solvent.

The lithium salt is not limited to a particular type and may include those commonly used in electrolyte solutions of lithium-sulfur batteries. The lithium salt may comprise, for example, at least one of $LiCl$, $LiBr$, $LiI$, $LiClO_4$, $LiBF_4$, $LiB_{10}Cl_{10}$, $LiPF_6$, $LiCF_3SO_3$, $LiCF_3CO_2$, $LiC_4BO_8$, $LiAsF_6$, $LiSbF_6$, $LiAlCl_4$, $CH_3SO_3Li$, $CF_3SO_3Li$, $(CF_3SO_2)_2NLi$, $(C_2F_5SO_2)_2NLi$, $(SO_2F)_2NLi$, $(CF_3SO_2)_3CLi$, chloro borane lithium, lower aliphatic carboxylic acid lithium, lithium tetraphenyl borate or lithium imide, but is not limited thereto.

The nonaqueous solvent is not limited to a particular type and may include those commonly used in electrolyte solutions of lithium-sulfur batteries. The nonaqueous solvent may comprise, for example, at least one of a cyclic carbonate solvent, a linear carbonate solvent, an ester solvent or a ketone solvent, but is not limited thereto.

In an embodiment of the present disclosure, the electrolyte solution may comprise $(CF_3SO_2)_2NLi$ as the lithium salt and a 2-component system of dioxolane (DOL)/dimethoxyethane (DME) as the nonaqueous solvent. For example, the electrolyte solution may further comprise the common additives such as $LiNO_3$.

In an embodiment of the present disclosure, the shape of the lithium-sulfur battery is not limited to a particular shape and may include, for example, coin-type, cylindrical, pouch-type or prismatic. Additionally, the lithium-sulfur battery may be used as a battery cell used as a power source of a small device and a unit cell of a medium- and large-scale battery module comprising a plurality of battery cells, and the use is not limited to a particular range of application.

Hereinafter, a method for manufacturing the positive electrode active material according to an embodiment of the present disclosure will be described in detail through examples. However, the following embodiment is provided by way of illustration, and the scope of the present disclosure is not limited thereto.

**[Manufacture of positive electrode active material]**

A positive electrode active material in acordance with the invention was manufactured by the following method, that is in accordance with the examples, the positive electrode active material comprising a) particles A comprising a first porous carbon material, at least part of which is crystalline, and catalyst particles deposited on the first porous carbon material; and b) particles B comprising a second porous carbon material, at least part of which is crystalline, and sulfur infiltrated into the second porous carbon material, wherein the particles A and the particles B have different morphologies.

FIG. 3 shows an SEM image of bundled CNT used as a raw material.

FIG. 4 shows an SEM image of entangled CNT used as a raw material.

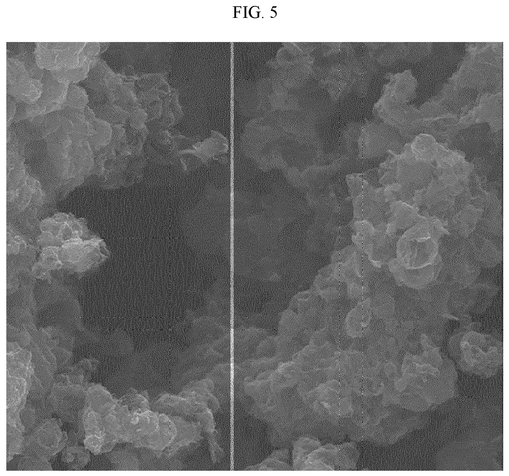

FIG. 5 shows an SEM image of reduced graphene oxide (rGO) used as a raw material.

**Example 1**

142 mg of iron chloride hexahydrate ($FeCl_2 \cdot 6H_2O$) and 100 mg of dopamine hydrochloride (98 wt%) were added to 500 mL of distilled water at a mole ratio of 1:1 and stirred at 230 rpm for 30 min at room temperature (23°C). 300 mg of bundled CNT (FIG. 3) was added and stirred at room temperature for 30 min to prepare a dispersion. Subsequently, 960 ppm of Trizma base (tris(hydroxymethyl)aminomethane (TRIS)) was added to the prepared dispersion to maintain a pH of 8.5. The obtained dispersion was stirred at room temperature for 24 hours, followed by filtration, washing with distilled water three times and then ethanol once, and drying at 60°C. Subsequently, the reaction product was put into a tube electric furnace under an argon atmosphere and thermally treated at 800 °C for 2 hours (temperature increase rate 1 °C/min) to obtain particles A having the average particle size ($D_{50}$) of 35 $\mu$m.

The obtained particles A comprises bundled CNT as a porous carbon substrate; transition metal composite particles disposed in at least one of the outer surface of the bundled CNT or the surface inside the pores and comprising a core comprising iron particles and a crystalline carbon coating layer coated on at least part of the surface of the core; and doped nitrogen. In this instance, a ratio of the thickness of the carbon coating layer to the average particle size $D_{50}$ of the transition metal composite particles was 15%.

Subsequently, entangled CNT (FIG. 4) and sulfur ($S_8$) were mixed at a weight ratio of 25:75 and thermally treated at 155°C for 1 hour by a melt-diffusion method to prepare a sulfur-carbon composite (particles B).

The particles A and the particles B were mixed at a weight ratio of 7.5:92.5, dispersed in water and dried to obtain a positive electrode active material having a structure in which the particles A and the particles B having different morphologies were in contact with each other.

## Example 2

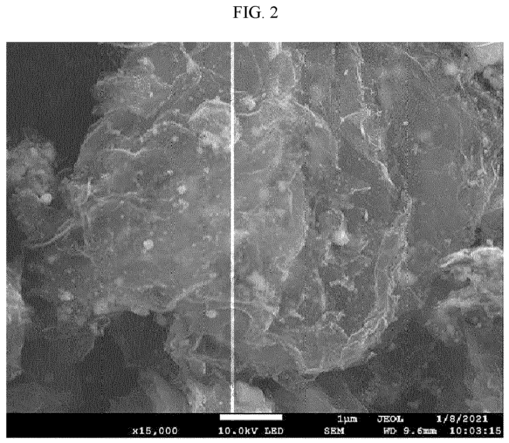

1.6g of reduced graphene oxide (rGO, FIG. 5); 24g of dicyanodiamide and 0.8g of ammonium metavanadate; and 0.2g of glucose were mixed in a 500 mL of solvent in which ethanol and water were mixed at a 1:1 volume ratio, and dissolved and dispersed through sonication and magnetic stirring. Subsequently, the solvent except the vanadium nitride precursor adsorbed on the carbon nanotubes surface was removed through vacuum filtration. Subsequently, drying was performed in a 80°C oven for 12 hours. Subsequently, thermal treatment was performed in a tube furnace of an inert atmosphere at 600°C for 3 hours and at 800°C for 2 hours to obtain a carbon composite (particles A) in which vanadium nitride particles as catalyst particles are deposited on the surface of the reduced graphene oxide. FIG. 2 shows an SEM image of the obtained particles A. In this instance, the vanadium nitride particles were present in an amount of 20 parts by weight based on 100 parts by weight of the obtained particles A. The amount of the vanadium nitride particles was measured using a thermogravimetric analyzer (TGA).

Subsequently, entangled CNT (FIG. 4) and sulfur ($S_8$) were mixed at a weight ratio of 25:75 to prepare a sulfur-carbon composite (particles B).

The particles A and the particles B were mixed at a weight ratio of 7.5:92.5, dispersed in water and dried to obtain a positive electrode active material having a structure in which the particles A and the particles B having different morphologies were in contact with each other.

FIG. 1 shows an SEM image of the obtained positive electrode active material, and in FIG. 1, each area in which the particles A and the particles B are disposed is represented through an image analysis method based on Energy Dispersive X-Ray Spectrometer (EDS) analysis.

## Example 3

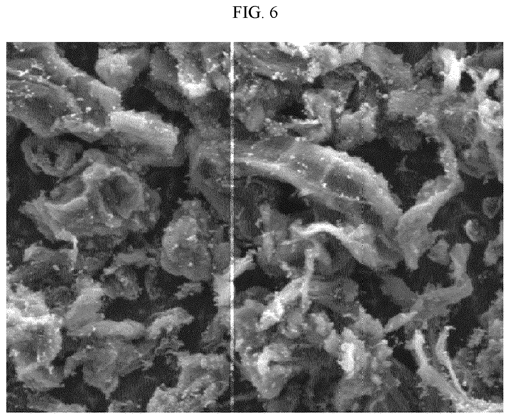

Particles A were obtained in the same way as described for Example 2 using the same amount of bundled CNT (FIG. 3) instead of reduced graphene oxide when manufacturing the particles A. FIG. 6 shows an SEM image of the obtained particles A.

Subsequently, a positive electrode active material was obtained by the same method as example 2.

## Comparative example 1 (WITHOUT PARTICLES A)

A positive electrode active material was manufactured by the same method as example 1 except that particles A were replaced with the same amount of bundled CNT (FIG. 3), that is, bundled CNT without catalyst particles deposited thereon.

Entangled CNT (FIG. 4) and sulfur ($S_8$) were mixed at a weight ratio of 25:75 to prepare a sulfur-carbon composite (particles B).

Subsequently, the bundled CNT and the particles B are mixed at a weight ratio of 7.5:92.5, dispersed in water and dried to obtain a positive electrode active material having a structure in which the bundled CNT and the particles B were in contact with each other.

## Comparative example 2 (WITHOUT PARTICLES B)

Particles A are prepared by the same method as example 1.

The prepared particles A, entangled CNT and sulfur ($S_8$) were mixed at a weight ratio of 5:20:75 and thermally treated at 155°C for 1 hour by a melt-diffusion method to obtain a positive electrode active material in which sulfur was infiltrated into the particles A and the entangled CNT.

## [Battery performance evaluation]

To evaluate the performance of lithium-sulfur batteries using the positive electrode active materials manufactured in example 1 and comparative examples 1 and 2, a lithium-sulfur coin-type battery was prepared as follows.

### Manufacture of battery

First, to manufacture a working electrode, each positive electrode active material manufactured as described above and polyvinylidene fluoride (PVDF) as a binder were mixed at a weight ratio of 9:1 using an N-methyl-2-pyrrolidone (NMP) solvent to prepare a positive electrode slurry. The prepared positive electrode slurry was coated on a carbon-coated Al foil and dried at 60°C for 8 hours. Subsequently, the electrode was pressed and cut into a coin shape to manufacture a positive electrode.

Subsequently, the positive electrode and a negative electrode were placed in a case together with an electrolyte solution with a separator interposed between the positive electrode and the negative electrode to manufacture a battery. For the positive electrode, the positive electrode manufactured as described above was prepared, and for the separator, a porous polypropylene membrane (Celgard 2400, Welcos Ltd) was prepared. For each of a reference electrode and a counter electrode, a lithium metal (200 $\mu$m thick) was prepared. An electrolyte solution comprises a mixed solvent (PANAX E-TEC Co., Korea) of 1,3-dioxolane and dimethoxymethane (DOL/DME) at a 1:1 volume ratio, 1.0 M bis(trifluoromethane) sulfonamide lithium salt (LiTFSI) as an electrolyte and 2.0 wt% of $LiNO_3$ (99.99% metal basis, Sigma-Aldrich) as an additive.

The loading amount of sulfur in each positive electrode was 2.25 mg/cm$^2$, and the El/S ratio of the battery was 10 $\mu$L/mg.

Discharge capacity and life evaluation

Each of the batteries manufactured as described above was charged and discharged at the current density of 0.1 C and the voltage of 1.8 V to 2.5 V for 3 cycles, the current density of 0.2C for 3 cycles, and then the current density of 0.5C for 20 cycles. The evaluation was all conducted in a constant temperature chamber at 25 ° C using PESCO5-0.1 equipment from PNE Solution..

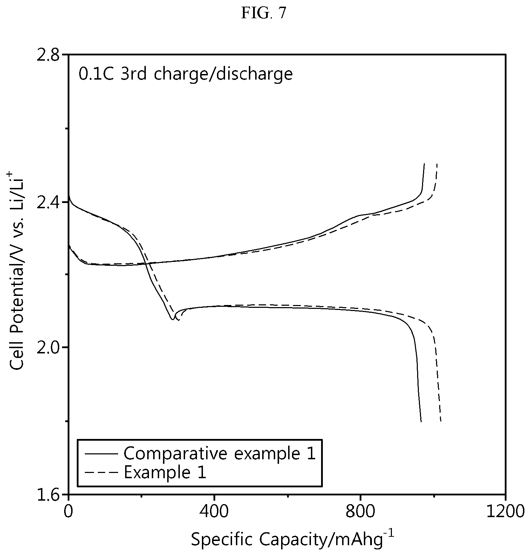

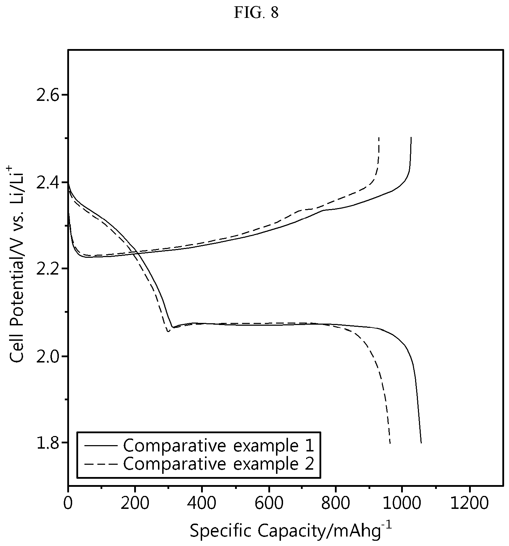

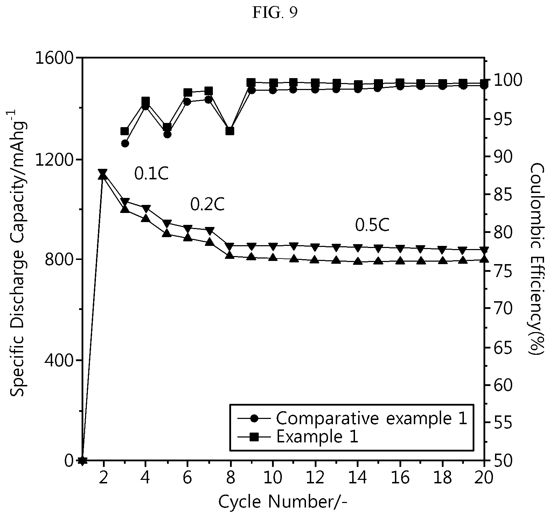

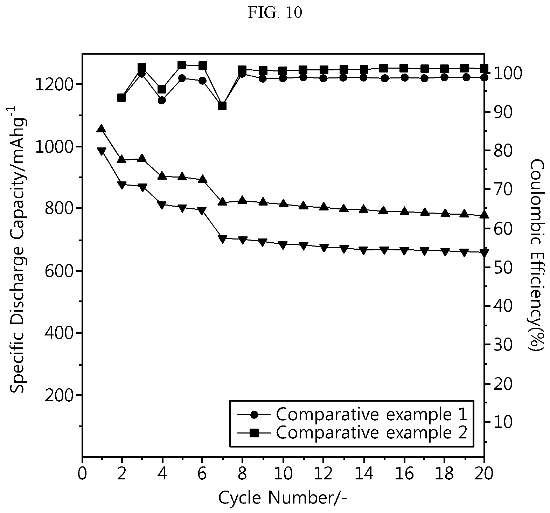

In this instance, graphs (FIGS. 7 and 8) show the result of measuring capacity-voltage after 3 charge/-discharge cycles at the current density of 0.1C, and graphs (FIGS. 9 and 10) show the result of measuring discharge capacity after 20 charge/discharge cycles.

First, referring to the graphs of FIGS. 7 and 9, it was found that the battery using the positive electrode active material according to example 1 had better discharge capacity and life characteristics than the battery using the positive electrode active material according to comparative example 1 in which Fe catalyst particles were not infiltrated.

In contrast, referring to the graphs of FIGS. 8 and 10, the battery using the positive electrode active material according to comparative example 2 in which sulfur was infiltrated into the Fe catalyst particle-loaded particles A, but nevertheless, had lower performance in 0.1C charge/discharge, 0.2C charge/discharge and 0.5C charge/discharge than the battery using the positive electrode active material according to comparative example 1 in which catalyst particles are not infiltrated.

Through this, it is found that it is possible to improve the performance of the lithium-sulfur batteries by the positive electrode active material containing the particles A and the particles B having different morphologies according to the present disclosure.

**Claims**

1. A positive electrode active material, comprising:

    a) particles A comprising a first porous carbon material, at least part of the first porous carbon material is crystalline, and catalyst particles deposited on the first porous carbon material; and
    b) particles B comprising a second porous carbon material, at least part of the second porous carbon material is crystalline, and sulfur infiltrated into the second porous carbon material,

    wherein the particles A and the particles B have different morphologies;
    the morphology of the particle represents a form, a shape, or a physiochemical or biochemical structure of the particle;
    a surface of at least some of the particles B is covered by the particles A, and
    wherein a coverage area of the particles B by the particles A is 20% to 50% of an entire outer area of the particles B;
    the first porous carbon material and the second porous carbon material are independently selected from at least one of carbon nanotubes (CNT), graphene, graphene oxide (GO), reduced graphene oxide (rGO), carbon black, graphite, graphite nanofiber (GNF), carbon nanofiber (CNF), activated carbon fiber (ACF), natural graphite, artificial graphite, expanded graphite, activated carbon or fullerene;
    the catalyst particles comprise vanadium nitride; or
    the catalyst particles comprise at least one of cobalt (Co) or iron (Fe).

2. The positive electrode active material according to claim 1, wherein a sphericity of the particles B is larger than a sphericity of the particles A;

    wherein the sphericity is defined according to the following equation 1:

    [Equation 1]

    $$\Psi = \frac{\pi^{\frac{1}{3}}\left(6V_p\right)^{\frac{2}{3}}}{A_p}$$

    where $\Psi$ denotes the sphericity,
    $V_p$ denotes a volume of the particle measured as set forth in the description, and
    $A_p$ denotes a surface area of the particle measured as set forth in the description.

3. The positive electrode active material according to claim 1 or 2, wherein 50% or more of the particles A cover at least a part of a surface of the particles B.

4. The positive electrode active material according to any of the claims 1 to 3, wherein a specific surface area of the particles A is larger than a specific surface area of the particles B, wherein the specific surface area is measured by BET method as set forth in the description.

5. The positive electrode active material according to any of the claims 1 to 4, wherein the particles A and the particles B are in contact with each other in at least one location at which the catalyst particles included in the particles A are present.

6. The positive electrode active material according to any of the claims 1 to 5, wherein a weight of the sulfur is 60 weight% to 90 weight% based on a total weight of the first porous carbon material and the second porous carbon material.

7. The positive electrode active material according to any of the claims 1 to 6, wherein the first porous carbon material and the second porous carbon material are different materials.

8. The positive electrode active material according to any of the claims 1 to 7, wherein the first porous carbon material and the second porous carbon material are a same material.

9. The positive electrode active material according to any of the claims 1 to 8, wherein each of the first porous carbon material and the second porous carbon material independently comprises at least one of bundled carbon nanotubes (CNT), entangled CNT or reduced graphene oxide (rGO).

10. The positive electrode active material according to any of the claims 1 to 9, wherein an elasticity measured as set forth in the description of each of the first porous carbon material and the second porous carbon material is larger than an elasticity measured as set forth in the description of an amorphous carbon material according to the definition provided in the description.

11. The positive electrode active material according to any of the claims 1 to 10, wherein an electrical conductivity of each of the first porous carbon material and the second porous carbon material is larger than an electrical conductivity of an amorphous carbon material according to the definition provided in the description.

12. A lithium-sulfur battery, comprising:

a positive electrode, a negative electrode, a separator between the positive electrode and the negative electrode; and a nonaqueous electrolyte solution, wherein the positive electrode comprises a positive electrode active material and the positive electrode active material is defined in any one of the claims 1 to 11.

**Patentansprüche**

1. Aktivmaterial für eine positive Elektrode, umfassend:

a) Teilchen A, umfassend ein erstes poröses Kohlenstoffmaterial, wobei mindestens ein Teil des ersten porösen Kohlenstoffmaterials kristallin ist, und Katalysatorteilchen, die auf dem ersten porösen Kohlenstoffmaterial abgeschieden sind; und
b) Teilchen B, umfassend ein zweites poröses Kohlenstoffmaterial, wobei mindestens ein Teil des zweiten porösen Kohlenstoffmaterials kristallin ist, und Schwefel, der in das zweite poröse Kohlenstoffmaterial infiltriert ist,

wobei die Teilchen A und die Teilchen B unterschiedliche Morphologien aufweisen; die Morphologie des Teilchens eine Form, eine Form oder eine physiochemische oder biochemische Struktur des Teilchens darstellt;
eine Oberfläche von mindestens einigen der Teilchen B von den Teilchen A bedeckt ist, und
wobei eine Bedeckungsfläche der Teilchen B durch die Teilchen A 20 % bis 50 % einer gesamten Außenfläche der Teilchen B beträgt;
das erste poröse Kohlenstoffmaterial und das zweite poröse Kohlenstoffmaterial unabhängig ausgewählt sind aus mindestens einem von Kohlenstoffnanoröhren (CNT), Graphen, Graphenoxid (GO), reduziertem Graphenoxid (rGO), Ruß, Graphit, Graphitnanofaser (GNF), Kohlenstoffnanofaser (CNF), Aktivkohlefaser (ACF), natürlichem Graphit, künstlichem Graphit, expandiertem Graphit, Aktivkohle oder Fulleren;
die Katalysatorteilchen Vanadiumnitrid umfassen; oder
die Katalysatorteilchen mindestens eines von Kobalt (Co) oder Eisen (Fe) umfassen.

2. Aktivmaterial für eine positive Elektrode nach Anspruch 1, wobei eine Sphärizität der Teilchen B größer ist als eine Sphärizität der Teilchen A;

wobei die Sphärizität gemäß der folgenden Gleichung 1 definiert ist:

14

[Gleichung 1]

$$\Psi = \frac{\pi^{\frac{1}{3}}(6V_p)^{\frac{2}{3}}}{A_p}$$

wobei $\Psi$ die Sphärizität bezeichnet,
$V_p$ ein Volumen des Teilchens bezeichnet, gemessen wie in der Beschreibung dargelegt, und
$A_p$ eine Oberfläche des Teilchens bezeichnet, gemessen wie in der Beschreibung dargelegt.

3. Aktivmaterial für eine positive Elektrode nach Anspruch 1 oder 2, wobei 50 % oder mehr der Teilchen A mindestens einen Teil einer Oberfläche der Teilchen B bedecken.

4. Aktivmaterial für eine positive Elektrode nach einem der Ansprüche 1 bis 3, wobei eine spezifische Oberfläche der Teilchen A größer ist als eine spezifische Oberfläche der Teilchen B, wobei die spezifische Oberfläche durch das BET-Verfahren gemessen wird, wie in der Beschreibung dargelegt.

5. Aktivmaterial für eine positive Elektrode nach einem der Ansprüche 1 bis 4, wobei die Teilchen A und die Teilchen B miteinander an mindestens einer Stelle in Kontakt stehen, an der die Katalysatorteilchen, die in den Teilchen A enthalten sind, vorhanden sind.

6. Aktivmaterial für eine positive Elektrode nach einem der Ansprüche 1 bis 5, wobei ein Gewicht des Schwefels 60 Gew.-% bis 90 Gew.-% beträgt, bezogen auf ein Gesamtgewicht des ersten porösen Kohlenstoffmaterials und des zweiten porösen Kohlenstoffmaterials.

7. Aktivmaterial für eine positive Elektrode nach einem der Ansprüche 1 bis 6, wobei das erste poröse Kohlenstoffmaterial und das zweite poröse Kohlenstoffmaterial unterschiedliche Materialien sind.

8. Aktivmaterial für eine positive Elektrode nach einem der Ansprüche 1 bis 7, wobei das erste poröse Kohlenstoffmaterial und das zweite poröse Kohlenstoffmaterial ein gleiches Material sind.

9. Aktivmaterial für eine positive Elektrode nach einem der Ansprüche 1 bis 8, wobei jedes von dem ersten porösen Kohlenstoffmaterial und dem zweiten porösen Kohlenstoffmaterial unabhängig mindestens eines von gebündelten Kohlenstoffnanoröhren (CNT), verwickelten CNT oder reduziertem Graphenoxid (rGO) umfasst.

10. Aktivmaterial für eine positive Elektrode nach einem der Ansprüche 1 bis 9, wobei eine Elastizität, gemessen wie in der Beschreibung dargelegt, von jedem von dem ersten porösen Kohlenstoffmaterial und dem zweiten porösen Kohlenstoffmaterial größer ist als eine Elastizität, gemessen wie in der Beschreibung dargelegt, eines amorphen Kohlenstoffmaterials gemäß der Definition, die in der Beschreibung bereitgestellt ist.

11. Aktivmaterial für eine positive Elektrode nach einem der Ansprüche 1 bis 10, wobei eine elektrische Leitfähigkeit von jedem von dem ersten porösen Kohlenstoffmaterial und dem zweiten porösen Kohlenstoffmaterial größer ist als eine elektrische Leitfähigkeit eines amorphen Kohlenstoffmaterials gemäß der Definition, die in der Beschreibung bereitgestellt ist.

12. Lithium-Schwefel-Batterie, umfassend:

eine positive Elektrode, eine negative Elektrode, einen Separator zwischen der positiven Elektrode und der negativen Elektrode; und eine nichtwässrige Elektrolytlösung, wobei die positive Elektrode ein Aktivmaterial für eine positive Elektrode umfasst und das Aktivmaterial für eine positive Elektrode in einem der Ansprüche 1 bis 11 definiert ist.

## Revendications

1. Matériau actif d'électrode positive, comprenant :

a) des particules A comprenant un premier matériau de carbone poreux, au moins une partie du premier matériau de carbone poreux est cristalline, et des particules de catalyseur déposées sur le premier matériau de carbone poreux ; et
b) des particules B comprenant un deuxième matériau de carbone poreux, au moins une partie du deuxième matériau de carbone poreux est cristalline, et du soufre infiltré dans le deuxième matériau de carbone poreux,

dans lequel les particules A et les particules B ont des morphologies différentes ;
la morphologie de la particule représente une forme, un façonnage ou une structure physiochimique ou biochimique de la particule ;
une surface d'une partie des particules B est couverte par les particules A, et
dans lequel une aire de couverture des particules B par les particules A est 20 % à 50 % d'une aire extérieure totale des particules B ;

le premier matériau de carbone poreux et le deuxième matériau de carbone poreux sont indépendamment sélectionnés parmi soit des nanotubes de carbone (CNT), du graphène, de l'oxyde de graphène (GO), de l'oxyde de graphène réduit (rGO), du noir de carbone, du graphite, une nanofibre de graphite (GNF), une nanofibre de carbone (CNF), une fibre de charbon actif (ACF), du graphite naturel, du graphite artificiel, du graphite expansé, du charbon actif ou du fullerène ;
les particules de catalyseur comprennent du nitrure de vanadium ; ou
les particules de catalyseur comprennent soit du cobalt (Co), soit du fer (Fe).

2. Matériau actif d'électrode positive selon la revendication 1, dans lequel une sphéricité des particules B est supérieure à une sphéricité des particules A ;

dans lequel la sphéricité est définie selon l'équation 1 ci-après :

[Équation 1]

$$\Psi = \frac{\pi^{\frac{1}{3}}\left(6V_p\right)^{\frac{2}{3}}}{A_p}$$

où $\Psi$ indique la sphéricité,
$V_p$ indique un volume de la particule, mesuré comme décrit dans la description, et
$A_p$ indique une surface de la particule, mesurée comme décrit dans la description.

3. Matériau actif d'électrode positive selon la revendication 1 ou 2, dans lequel 50 % ou plus des particules A couvrent au moins une partie d'une surface des particules B.

4. Matériau actif d' électrode positive selon l'une quelconque des revendications 1 à 3, dans lequel une surface spécifique des particules A est supérieure à une surface spécifique des particules B, dans lequel la surface spécifique est mesurée selon le procédé BET comme décrit dans la description.

5. Matériau actif d'électrode positive selon l'une quelconque des revendications 1 à 4, dans lequel les particules A et les particules B sont en contact les unes avec les autres dans au moins un emplacement où les particules de catalyseur incluses dans les particules A sont présentes.

6. Matériau actif d'électrode positive selon l'une quelconque des revendications 1 à 5, dans lequel un poids du soufre est 60 % en poids à 90 % en poids sur la base d'un poids total du premier matériau de carbone poreux et du deuxième matériau de carbone poreux.

7. Matériau actif d'électrode positive selon l'une quelconque des revendications 1 à 6, dans lequel le premier matériau de carbone poreux et le deuxième matériau de carbone poreux sont des matériaux différents.

8. Matériau actif d'électrode positive selon l'une quelconque des revendications 1 à 7, dans lequel le premier matériau de carbone poreux et le deuxième matériau de carbone poreux sont le même matériau.

9. Matériau actif d'électrode positive selon l'une quelconque des revendications 1 à 8, dans lequel le premier matériau de carbone poreux et le deuxième matériau de carbone poreux comprennent chacun indépendamment soit des nanotubes de carbone (CNT) regroupés, des CNT enchevêtrés ou de l'oxyde de graphène réduit (rGO).

10. Matériau actif d'électrode positive selon l'une quelconque des revendications 1 à 9, dans lequel une élasticité mesurée comme décrit dans la description du premier matériau de carbone poreux et du deuxième matériau de carbone poreux est supérieure à une élasticité mesurée comme décrit dans la description d'un matériau de carbone amorphe selon la définition fournie dans la description.

11. Matériau actif d'électrode positive selon l'une quelconque des revendications 1 à 10, dans lequel une conductivité électrique de chacun du premier matériau de carbone poreux et du deuxième matériau de carbone poreux est supérieure à une conductivité électrique d'un matériau de carbone amorphe selon la définition fournie dans la description.

12. Batterie au lithium-soufre, comprenant :

une électrode positive, une électrode négative, un séparateur entre l'électrode positive et l'électrode négative ; et une solution d'électrolyte non aqueuse,
dans laquelle l'électrode positive comprend un matériau actif d'électrode positive et le matériau actif d'électrode positive est défini dans l'une quelconque des revendications 1 à 11.

FIG. 1

FIG. 2

FIG. 3

FIG. 4

FIG. 5

FIG. 6

FIG. 7

FIG. 8

FIG. 9

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220110413
- KR 1020230025408
- KR 1020220110385
- KR 1020220187899
- KR 1020230042283

**Non-patent literature cited in the description**

- **ZHANG et al.** *Adv. Energy Mater.*, 2017, vol. 7, 1602543
- **LIU**. *Nanoscale*, 2018, vol. 10, 5246-5253